# EUROPÄISCHE PATENTSCHRIFT

(11) **EP 1 496 093 B1**
(45) Veröffentlichungstag und Bekanntmachung des Hinweises auf die Patenterteilung: **26.04.2006**
(21) Anmeldenummer: 04102129.6
(22) Anmeldetag: 14.05.2004
(51) Int. Cl.: C09D 175/06, C08G 18/80, C09D 167/00

(54) **Polyesterlacke für Dickschichtlackierungen**
Polyester thick-layer coating compositions
Compositions de revêtement de polyester à couches épaisses

(30) Priorität: 11.07.2003 DE 10331795
(43) Veröffentlichungstag der Anmeldung: 12.01.2005
(73) Patentinhaber: Degussa AG, 40474 Düsseldorf (DE)
(72) Erfinder: Brand, Thorsten, Dr., 45659 Recklinghausen (DE); Schmidt, Friedrich Georg, Dr., 45721 Haltern am See (DE); Glöckner, Patrick, Dr., 40885 Ratingen (DE); Kühnle, Adolf, Dr., 45770 Marl (DE); Jost, Carsten, Dr., 45770 Marl (DE)

(56) Entgegenhaltungen:
- EP-A- 0 841 382
- EP-B- 0 584 197
- WO-A-01/10871

## Beschreibung

Die Erfindung betrifft Polyesterlacke für Dickschichtlackierungen, sowie ein Verfahren zu deren Herstellung, ein Verfahren zur Herstellung einer Dickschichtlackierung unter Einsatz des erfindungsgemäßen Polyesterlackes und die daraus resultierende Dickschichtlackierung.

Zur Beschichtung metallischer Substrate auf industriellen Bandlackieranlagen kommen Beschichtungsstoffe auf Basis verschiedener Bindemittelsysteme zum Einsatz. Die wichtigsten Systeme sind auf Basis Polyester, Polyester-Polyurethan, PVC (Plastisole, Organosole) oder Polyvinylidenfluorid (PVDF) formuliert. Daneben kommen des weiteren Systeme auf Basis siliconmodifizierter Polyester sowie auf Epoxid- oder Acrylharz-Basis zum Einsatz.

Die bei Raumtemperatur flüssig verarbeitbaren Beschichtungsstoffe werden auf den industriellen Lackieranlagen in der Regel mit Walzlackieranlagen auf Bänder (Stahl, verzinkter Stahl, Aluminium, u.a.) aufgetragen. Dieses Auftragsverfahren zeichnet sich durch verschiedene Vorteile aus. Es gestattet auf typischen Hochleistungsanlagen in der Coil-Coating-Industrie hohe Bandgeschwindigkeiten (bis 200 m/min) und gewährleistet hohe Gleichmäßigkeit des Beschichtungsauftrags. Die Verfilmung und Aushärtung der flüssigen Beschichtungsstoffe auf Bändern erfolgt in Durchlufttrocknern. Die genannten Beschichtungsstoffe lassen sich nach dem Stand der Technik nur mit Filmschichtstärken bis ca. 65 Mikrometer (µm) in einem Trockner-Durchlauf verarbeiten. Eine Ausnahme hiervon stellen Beschichtungen auf Basis PVC (Plastisole) dar, welche mit Schichtstärken im Bereich von 80 bis 200 µm und zugleich relativ hohen Bandgeschwindigkeiten zu Dickschichtlackierungen verarbeitet werden können.

Aus den vorbeschichteten Bändern erfolgt durch Zuschnitt und Umformen die Herstellung einer Vielzahl industrieller Erzeugnisse, z.B. für die Bauindustrie, im Gerätebau, im Verkehrswesen oder für die Blechverpackungsindustrie (Can Coating). Dickschichtlackierungen sind dann von besonderem Interesse, wenn das aus vorbeschichtetem Metall hergestellte Erzeugnis hohe Beständigkeit gegen Korrosionsangriff aufweisen muss, z.B. in der Außen-Architektur oder in der Innen-Architektur oder beim Betrieb von Geräten im Feuchtklima. Dickschichtlackierungen auf Basis von PVC-Plastisolen zeichnen sich durch hervorragenden Korrosionsschutz, sehr gute Umformbarkeit, problemlose Farbtonauswahl und Verarbeitbarkeit auf den Beschichtungsanlagen aus. Andererseits weisen derartige Überzugsmittel auf PVC-Basis einige Nachteile auf. Aufgrund sehr schlechter Haftungseigenschaften auf metallischen Substraten können PVC-Plastisole nur zweischichtig auf speziellen Haftgrundierungen (Spezialprimer für PVC-Plastisole) verarbeitet werden. Die in typischen PVC-Plastisolen enthaltenen Weichmacher sind starke Quellungsmittel, so dass die Primer-Auswahl auf spezielle Systeme eingeengt ist.

Ein entscheidender Nachteil von PVC-Dickschichtlackierungen ist jedoch, dass die Entsorgung von PVC-beschichteten Blechen zunehmend problematisch und kostenintensiv wird.

Dies trifft auch für das Verfahren zu, metallische Substrate auf Bandbeschichtungsanlagen durch Aufkaschieren von PVC-Folien (mit einer Schichtdicke von 40 bis 400 µm) zu beschichten. Zwar stehen Folien auf halogenfreier Polymer-Basis (Polyolefine, Polyacrylat u.a.) zur Verfügung, jedoch sind bestimmte Nachteile bekannt. So sind spezielle Kaschierkleber erforderlich. Faltenbildung mit dünneren Folien, elektrostatische Staubanziehung, Glanzgrad-Schwankungen und Verlust der Folienprägung sind bekannte Probleme des Folienkaschier-Verfahrens.

Bekannt ist auch das Verfahren der Heißschmelz-Beschichtung von Metallbändern mit thermoplastischen Polymeren. Nachteilig bei diesem Verfahren ist der hohe maschinelle Aufwand für das Extrusionsbeschichten.

Die DE 40 12 020 beschreibt die Dickschichtlackierung von Bändern mit Pulverlacken, z. B. auf Polyester-Basis. Nachteilig ist bei diesem Verfahren die geringe Bandgeschwindigkeit, limitiert durch das elektrostatische Auftragsverfahren der Pulverlacke.

Die EP 0 466 310 beschreibt die Verwendung von kristallinen, in Lösemitteln unlöslichen Polymeren in Dispersionen mit Teilchengrößen vorzugsweise im Bereich von 1 bis 10 µm als filmbildende Bestandteile für Beschichtungen. Für die Stabilität solcher Dispersionslacke werden spezielle Stabilisatoren als unverzichtbar beschrieben. Gemäß dieser Patentschrift ist es nicht möglich, durch physikalische Vermahlung hergestellte Feinpulver von kristallinen, thermoplastischen Polymeren zur Herstellung von Dispersionslacken einzusetzen. Dieses Verfahren liefert Lacke mit äußerst inhomogener Struktur und schlechten Lackfilmeigenschaften.

EP 0 841 382 beschreibt halogenfreie hitzchärtende bei Raumtemperatur flüssige Systeme für das Bandlackierverfahren, die z.B. im Walzauftragsverfahren mit hohen Bandgeschwindigkeiten aufgetragen werden können und zu Dickschichtlackierungen mit guter mechanischer Verformbarkeit und sehr gutem Korrosionsschutz führen. Die Beispiele lehren jedoch, dass maximal Schichtdicken von 40 bis 65 µm erzielt werden können.

Aufgabe der Erfindung war die Entwicklung von Polyesterlacken für hochbelastbare Dickschichtlackierungen, die eine Schichtdicke dieser Dickschichtlackierungen von über 65 µm ermöglichen.

Überraschenderweise wurde gefunden, dass Polyesterlacke, die polyedrische oligomere Silizium-Sauerstoffeluster aufweisen, die Herstellung von Dickschichtlackierungen ermöglichen. Diese Dickschichtlackierungen können eine Schichtdicke von über 65 µm aufweisen. Die Lösung der Aufgabe war umso überraschender, zumal sich zeigte, dass diese Dickschichtlackierungen mit einer Schichtdicke von größer 65 µm eine hohe Abriebfestigkeit, eine hohe Einschichthaftung und trotz der großen Schichtdicke eine gute mechanische Verformbarkeit aufweisen.

Gegenstand der vorliegenden Erfindung sind Polyesterlacke für Dickschichtlackierungen, im wesentlichen enthaltend
A) 10 bis 45 Gew.-% mindestens eines gelösten, linearen und/ oder schwach verzweigten amorphen Polyesters,
B) 0,5 bis 20 Gew.-% mindestens eines blockierten Polyisocyanatharzes und/oder
C) 0 bis 15 Gew.-% mindestens eines Triazinharzes,
D) 10 bis 50 Gew.-% Feinpulver von kleiner 150 µm Korngröße mindestens eines hochmolekularen kristallinen Copolyesters in Suspension, mit einer Molmasse von 10000 bis 50 000 g/mol und einer geringer Quellbarkeit in Lösemitteln,
E) 0 bis 20 Gew.-% Pigmente und anorganische Füllstoffe,
F) 0 bis 1 Gew.-% mindestens eines Katalysators,
G) 0 bis 5 Gew.-% mindestens eines Additives,
H) 25 bis 45 Gew.-% organischer Lösemittel mit einem Siedepunkt über 160°C und
I) 0,01 bis 5 Gew.-% polyedrischer oligomerer Silizium-Sauerstoffcluster, gemäß der Formel

   [(RₐX_{b}SiO_{1,5})ₘ (R_{c}X_{d}SiO)ₙ (R_{c}X_{f}Si₂O_{2,5})ₒ (R_{g}XₕSi₂O₂)ₚ]

   mit:
   a, b, c = 0-1; d = 1-2; c, g, f = 0-3; h = 1-4;
   m+n+o+p ≥ 4; a+b = 1; c+d = 2; e+f = 3 und g+h = 4;

   - **R =**: Wasserstoffatom, Alkyl-, Cycloalkyl-, Alkenyl-, Cycloalkenyl-, Alkinyl-, Cycloalkinyl-, Aryl-, Heteroarylgruppe oder Polymereinheit, die jeweils substituiert oder unsubstituiert sind, oder weitere funktionalisierte polyedrische oligomere Silizium-Sauerstoffclustereinheiten, die über eine Polymereinheit oder eine Brückeneinheit angebunden sind,
   - **X =**: Oxy-, Hydroxy-, Alkoxy-, Carboxy-, Silyl-, Alkylsilyl-, Alkoxysilyl-, Siloxy-, Alkylsiloxy-, Alkoxysiloxy-, Silylalkyl-, Alkoxysilylalkyl-, Alkylsilylalkyl-, Halogen-, Epoxy-, Ester-, Fluoralkyl-, Isocyanat-, blockierte Isocyanat-, Acrylat-, Methacrylat-, Nitril-, Amino-, Phosphingruppe oder mindestens eine solche Gruppe vom Typ **X** aufweisenden Substituenten vom Typ **R**,
   wobei die sowohl die Substituenten vom Typ **R** als auch vom Typ **X** gleich oder unterschiedlich sind.

Weiterer Gegenstand der Erfindung ist ein Verfahren zur Herstellung des erfindungsgemäßen Polyesterlackes, wobei die polyedrischen oligomeren Silizium-Sauerstoffcluster gelöst oder dispergiert in einem Lösemittel der Polyesterlackmischung zugegeben werden, sowie ein Verfahren zur Herstellung einer Dickschichtlackierung, dadurch gekennzeichnet, dass ein erfindungsgemäßer Polyesterlack eingesetzt wird. Des weiteren sind Gegenstand der Erfindung sind Dickschichtlackierungen hergestellt gemäß dem erfindungsgemäßen Verfahren, wobei diese eine Schichtdicke von 50 bis 120 µm aufweisen.

Im Gegensatz zu vielen herkömmlichen Additiven kann über die Substituenten der polyedrischen oligomeren Silizium-Sauerstoffcluster deren Verhalten und damit auch die Eigenschaften des daraus resultierenden Polyesterlackes beeinflusst werden. Die physikalischen und chemischen Eigenschaften lassen sich somit gezielt voreinstellen. Die Polarität kann über die Substituenten vom Typ **R** und Typ **X** an den polyedrischen oligomeren Silizium-Sauerstoffclustern eingestellt werden. Über die unterschiedliche Struktur und Polarität dieser Substituenten kann gesteuert werden, ob die polyedrischen oligomeren Silizium-Sauerstoffcluster mehr anorganischen oder mehr organischen Charakter aufweisen. Auf diese Weise können Polyesterlacke zur Verfügung gestellt werden, die es ermöglichen, Dickschichtlackierungen mit einer Schichtdicke von größer 65 µm und einer hohen Abriebfestigkeit, einer hohen Einschichthaftung und trotz der großen Schichtdicke einer guten mechanischen Verformbarkeit herzustellen.

Die in den erfindungsgemäßen Polyesterlacken enthaltenen Polyesterharze (A) sind Stand der Technik (vgl. Ullmann Encyclopedia of Industrial Chemistry Vol. A 18 "Paint and Coatings", Section 2.7 "Saturated Polyester Coatings"). Diese werden vorzugsweise aus Polycarbonsäuren und Polyalkoholen hergestellt. Geeignete Polycarbonsäuren aromatischer Art sind hierfür vorzugsweise Terephthalsäure, Isophthalsäure, Phthalsäure oder Trimellitsäure. Weitere geeignete Polycarbonsäuren können cycloaliphatische Dicarbonsäuren, wie beispielsweise Hexahydroterephthalsäure, Hexahydrophthalsäure, sowie lineare aliphatische Dicarbonsäuren, wie beispielsweise Bernstein-, Glutar-, Adipin-, Azelain-, Sebazin-, Decandicarbonsäure oder dimere Fettsäuren, sein. Geeignete Polyalkohole für die Herstellung der Polyesterharze (A) sind Glykole, wie z.B. Ethylenglykol, Diethylenglykol, 1,2-Propandiol, 1,3-Butandiol, 1,4-Butandiol, 1,5-Pentandiol, 1,6-Hexandiol, 2,2-Dimethyl-1,3-propandiol (Neopentylglykol), 1,4-Cyclohexandimethanol, sowie trifunktionelle Alkohole, wie z.B. Trimethylolpropan (2-Ethyl-2-hydroxymelhyl-1,3-propandiol), Glycerin. Die in den erfindungsgemäßen Polyesterlacken enthaltenen Polyesterharze haben vorzugsweise Molmassen Mₙ im Bereich von 1000 bis 25 000 g/mol (Zahlenmittel), bevorzugt von 2 000 bis 7 000 g/mol (Zahlenmittel). Die Struktur der in den erfindungsgemäßen Polyesterlacken enthaltenen Polyesterharze kann linear oder verzweigt sein, vorzugsweise ist sie linear oder schwach verzweigt. Diese Polyesterharze haben vorzugsweise entsprechende Hydroxylzahlen im Bereich von 5 bis 150 mg KOH/g, bevorzugt von 20 bis 80 mg KOH/g. Die Polyesterharze in dem erfindungsgemäßen Polyesterlack sind vorzugsweise Hydroxygruppen-haltig, können jedoch zugleich auch Säurezahlen im Bereich von 0 bis 30 mg KOH/g aufweisen. Entsprechend der Zusammensetzung sind die in den erfindungsgemäßen Polyesterlacken enthaltenen Polyesterharze durch Glasumwandlungstemperaturen vorzugsweise im Bereich von -50 bis +70 °C, bevorzugt im Bereich von 0 bis +40 °C gekennzeichnet. Bevorzugt sind erfindungsgemäße Polyesterlacke, die Polyesterharze mit einer Molmasse Mₙ im Bereich von 1 000 bis 25 000 g/mol, Hydroxylzahlen von 5 bis 150 mg KOH/g und eine Glasumwandlungstemperaturen von -50 bis +70 °C aufweisen. Die in den erfindungsgemäßen Polyesterlacken enthaltenen Polyesterharze (A) sind in nachfolgend beschriebenen Lacklösemitteln lagerstabil löslich. Entsprechend ihrer Zusammensetzung sind diese Polyesterharze nichtkristallin (amorph) und gut verträglich mit anderen Larkrohstoffen.

Die in den erfindungsgemäßen Polyesterlacken enthaltenen Vernetzerharze sind vorzugsweise blockierte Polyisocyanatharze (B) und/oder Triazinharze (C). Bevorzugt weisen die erfindungsgemäßen Polyesterlacke blockierte Polyisocyanatharze (B) auf, da diese sich besonders gut zur Herstellung von Dickschicht-Polyester-Polyurethan-Beschichtungen eignen. Geeignete blockierte Polyisocyanatharze bestehen vorzugsweise aus Triisocyanuratharzen auf Basis von cycloaliphatischen oder aliphatischen Diisocyanaten, wie z.B. 3-Isocyanatomethyl-3,5,5-trimethylcyclohexylisocyanat (Isophorondiisocyanat, IPDI) oder Hexamethylendiisocyanat (HDI), vorzugsweise blockiert mit Oximen (z.B. Acetonoxim, Butanonoxim), Aminen (z B. Diisopropylamin) und/oder Amiden (z. B. e-Caprolactam).

Geeignete Triazinharze (C) für die erfindungsgemäßen Polyesterlacke sind vorzugsweise Reaktionsprodukte aus Melamin und/oder Benzoguanamin mit Formaldehyd, verethert mit aliphatischen Alkoholen, wie z.B. Methanol oder n-Butanol. Besonders geeignet für die erfindungsgemäßen Polyesterlacke sind oligomere Triazinharze mit einem relativ geringem Vorkondensationsgrad. Falls die Polyesterharze (A) mit Triazinharzen (C) des erfindungsgemäßen Polyesterlackes vernetzen sollen, so beträgt das Massenverhältnis von Polyesterharzen (A) zu Triazinharzen (C) in den erfindungsgemäßen Polyesterlacken vorzugsweise von 95 : 5 bis 70 : 30, bevorzugt von 90 : 10 bis 80 : 20. Soll eine Vernetzung der Polyesterharze (A) mit den blockierten Polyisocyanatharzen (B) der erfindungsgemäßen Polyesterlacke zu Polyester-Polyurethan-Beschichtungen erfolgen, so weist der erfindungsgemäße Polyesterlack vorzugsweise ein stöchiometrisches Molverhältnis der Polyester-Hydroxy-Gruppen zu den (blockierten) Isocyanatgruppen im Bereich von 1 : 0,8 bis 1 : 1,25, bevorzugt von 1 : 1 auf.

Die erfindungsgemäßen Polyesterlacke können übliche Lack-Katalysatoren (F) enthalten. Für erfindungsgemäße Polyesterlacke mit Polyesterharzen (A) und Triazinharzen (C) sind dies vorzugsweise Katalysatoren auf Basis von Sulfonsäuren, insbesondere auf Basis von Dodecylbenzolsulfonsäure, p-Totuolsulfonsäure, Dinonylnaphthalindisulfonsäure, bevorzugt in blockierter Form, insbesondere als Salze mit aliphatischen Aminen oder als Addukte mit Epoxidverbindungen. Erfindungsgemäße Polyesterlacke mit Polyesterharzen und blockierten Polyisocyanatharzen weisen bevorzugt Katalysatoren auf Basis von zinnorganischen Verbindungen, insbesondere auf der Basis von Dibutylzinndilaurat, auf.

Zweckmäßigerweise können die erfindungsgemäßen Polyesterlacke Additive (G) aufweisen, insbesondere mit entlüftungs- und entschäumungsfördernder Wirkung bzw. zur Verbesserung der Benetzung von Pigmentoberflächen oder der metallischen Substratoberflächen.

Die in den erfindungsgemäßen Polyesterlacken enthaltenen Feinpulver bestehen aus kristallinen Copolyestern (D). Diese Copolyester sind Stand der Technik (vgl. DE 23 46 559, "Beschichtungspulver auf Basis von thermoplastischen Polyestern", Dynamit Nobel AG). Die in den erfindungsgemäßen Polyesterlacken enthaltenen kristallinen Copolyester (D) werden vorzugsweise aus Dicarbonsäuren, insbesondere aus aromatische Dicarbonsäuren, wie beispielsweise Terephthal- und Isophthalsäure, bevorzugt aus linearen aliphatischen Dicarbonsäuren, wie Bernstein-, Adipin-, Sebazin-, Decandicarbonsäure, und Dialkoholen hergestellt. Geeignete Dialkohole sind hierfür vorzugsweise Glykole, wie beispielsweise Ethylenykol, 1,4-Butandiol oder 1,6-Hexandiol. In einer besonderen Ausführungsform des erfindungsgemäßen Polyesterlackes enthält dieser einen kristallinen Copolyester (D) auf der Basis der Monomere Terephthalsäure und 1,4-Butandiol. Die in den erfindungsgemäßen Polyesterlacken enthaltenen Copolyester (D) haben vorzugsweise Molmassen Mₙ im Bereich von 10 000 bis 50 000 g/mol (Zahlenmittel), bevorzugt im Bereich von 15 000 bis 30 000 g/mol (Zahlenmittel). Diese Copolyester (D) können Hydroxylzahlen (bezogen auf endständige Hydroxylgruppen) im Bereich von 1 bis 10 mg KOH/g aufweisen. Entsprechend der Zusammensetzung können die erfindungsgemäßen Polyesterlacke Copolyester (D) aufweisen, die vorzugsweise eine Glasumwandlungstemperaturen im Bereich von -60 bis+70 °C, bevorzugt im Bereich von -50 bis +40 °C aufweisen. Die in den erfindungsgemäßen Polyesterlacken enthaltenen kristallinen Copolyester (D) weisen vorzugsweise Schmelztemperaturen im Bereich von 80 bis 250 °C, bevorzugt von 100 bis 200 °C auf. Entsprechend ihrer Zusammensetzung sind diese Copolyester (D) kristallin. Sie sind in nachfolgend beschriebenen Lacklösemitteln unlöslich und bei einer Lagerung bei Raumtemperatur in denselben nur wenig quellbar. Die Massenzunahme durch Quellung der in den erfindungsgemäßen Polyesterlacken enthaltenen Copolyester (D) darf bei Temperaturen von bis zu 50 °C nach 24 Stunden Rühren des Copolyester-Granulats in dem organischen Lösemittel SOLVESSO 200 S vorzugsweise den Wert von 10 Gew.-%, bevorzugt von 5 Gew.-% nicht überschreiten. Aufgrund ihrer geringen Quellbarkeit eignen sich diese kristallinen Copolyester (D) mit Molmassen Mₙ von mindestens 10 000 g/mol im Zahlenmittel besser in den erfindungsgemäßen Polyesterlacken als entsprechende niedermolekulare kristalline Copolyester.

Hochmolekulare Copolyester (D) sind als filmbildende Bestandteile des erfindungsgemäßen Polyesterlacks auch dadurch gekennzeichnet, dass sie wesentlich bessere lacktechnische Eigenschaften aufzeigen können, im besonderen die Elastizität/Härte-Relation der Beschichtungen betreffend. Niedermolekulare kristalline Copolyester zeigen in der Regel in Beschichtungen eine schlechtere Flexibilität, können andererseits dementsprechend leichter zu Feinpulver vermahlen werden. Das Feinpulver eines hochmolekularen kristallinen Copolyester (D) weist vorzugsweise eine Korngröße von maximal 150 µm, bevorzugt von maximal 100 µm auf.

Die erfindungsgemäßen Polyesterlacke enthalten ein organisches Lösemittel (H) mit einem Siedepunkt von über 160 °C, bevorzugt von mindestens 220 °C. Dieses Lösemittel (H) können aromatische Kohlenwasserstoffe, Ester, insbesondere Ethylethoxypropionat, Butylglykolacetat, Butyldiglykolacetat, Dibasic Ester Mixture (DBE), Glykolether, insbesondere Butylglykol, Butyldiglykol, Methyldipropylglykol oder Alkohole, insbesondere Benzylalkohol, n-Butanol, sein. Die Auswahl der Lösemittel richtet sich vor allem nach der Maßgabe, dass die Feinpulver der kristallinen Copolyester (D) keine erhebliche Quellung erfahren dürfen, was sonst zum Eindicken der Polyesterlacke führen könnte. Für die erfindungsgemäßen Polyesterlacke eignen sich vorzugsweise aromatische Kohlenwasserstoffe mit Siedepunkten, die in einem Bereich ab 160 °C (z.B. Solventnaphtha 100), bevorzugt ab 185 °C (z.B. Solventnaphtha 150) und besonders bevorzugt ab 220 °C (z.B. SOLVESSO 200 S, Exxon) liegen. Der Anteil der organischen Lösemittel (H) beträgt in den erfindungsgemäßen Polyesterlacken im Falle von unpigmentierter Formulierungen vorzugsweise von 30 bis 45 Gew.-%, im Fall von pigmentierter Formulierungen vorzugsweise von 25 bis 40 Gew.-%.

Die erfindungsgemäßen Polyesterlacke können Pigmente und anorganische Füllstoffe (E), sowie andere übliche Zusatzstoffe, wie beispielsweise Wachse aufweisen. Pigmente können beispielsweise Titandioxid oder andere anorganische Buntpigmente, vorzugsweise auf der Basis von Eisen-, Chrom- oder Nickel-Oxiden sein.

Als weitere Komponente können die erfindungsgemäßen Polyesterlacke polyedrische oligomere Silizium-Sauerstoffcluster (1) aufweisen. Hierunter werden vorzugsweise die beiden Verbindungsklassen der Silasesquioxane und der Sphärosilikate verstanden.

Silasesquioxane sind oligomere oder polymere Stoffe, deren vollständig kondensierte Vertreter die allgemeine Formel (SiO_{3/2}R)ₙ besitzen, wobei n > 4 und der Rest R ein Wasserstoffatom sein kann, meist jedoch einen organischen Rest darstellt. Die kleinste Struktur eines Silasesquioxans ist der Tetraeder. Voronkov und Lavrent'yev (Top. Curr. Chem. **102** (1982), 199-236) beschreiben die Synthese von vollständig kondensierten und unvollständig kondensierten oligomeren Silasesquioxanen durch hydrolytische Kondensation trifunktioneller RSiY₃-Vorstufen, wobei R für einen Kohlenwasserstoffrest steht und Y eine hydrolysierbare Gruppe, wie z.B. Chlorid, Alkoxid oder Siloxid, darstellt. Lichtenhan et al. beschreiben die basenkatalysierte Herstellung von oligomeren Silasesquioxanen (WO 01/10871). Silasesquioxane der Formel R₈Si₈O₁₂ (mit gleichen oder unterschiedlichen Kohlenwasserstoffresten R) können basenkatalysiert zu funktionalisierten, unvollständig kondensierten Silasesquioxanen, wie z.B. R₇Si₇O₉(OH)₃ oder auch R₈Si₈O₁₁(OH)₂ und R₈Si₈O₁₀(OH)₄, umgesetzt werden (Chem. Commun. (1999), 2309-10; Polym. Mater. Sci. Eng. **82** (2000), 301-2; WO 01/10871) und damit als Stammverbindung für eine Vielzahl verschiedener unvollständig kondensierter und funktionalisierter Silasesquioxane dienen. Insbesondere die Silasesquioxane (Trisilanole) der Formel R₇Si₇O₉(OH)₃ lassen sich durch Umsetzung mit funktionalisierten, monomeren Silanen (corner capping) in entsprechend modifizierte oligomere Silasesquioxane überführen.

Oligomere Sphärosilikate sind ähnlich aufgebaut wie die oligomeren Silasesquioxane. Auch sie besitzen eine "käfigartige" Struktur. Im Unterschied zu den Silasesquioxanen, bedingt durch ihre Herstellungsmethode, sind die Siliziumatome an den Ecken eines Sphärosilikates mit einem weiteren Sauerstoffatom verbunden, welches wiederum weiter substituiert ist. Oligomere Sphärosilikate lassen sich durch Silylierung geeigneter Silikat-Vorstufen herstellen (D. Hoehbel, W. Wicker, Z. Anorg. Allg. Chem. **384** (1971),43-52; P. A. Agaskar, Colloids Surf. **63** (1992), 131-8; P. G. Harrison, R. Kannengiesser, C. J. Hall, J. Main Group Met. Chem. **20** (1997), 137-141; R. Weidner, Zeller, B. Deubzer, V. Frey, Ger. Offen. (1990), DE 38 37 397). So kann beispielsweise das Sphärosilikat mit der Struktur **2** aus der Silikat-Vorstufe der Struktur **1** synthetisiert werden, welche ihrerseits über die Umsetzung von Si(OEt)₄ mit Cholinsilikat bzw. durch die Umsetzung von Abfallprodukten der Reisernte mit Tetramethylammoniumhydroxid zugänglich ist (R. M. Laine, I. Hasegawa, C. Brick, J. Kampf, Abstracts of Papers, 222nd ACS National Meeting, Chicago, IL, United States, August 26-30, 2001, MTLS-018).

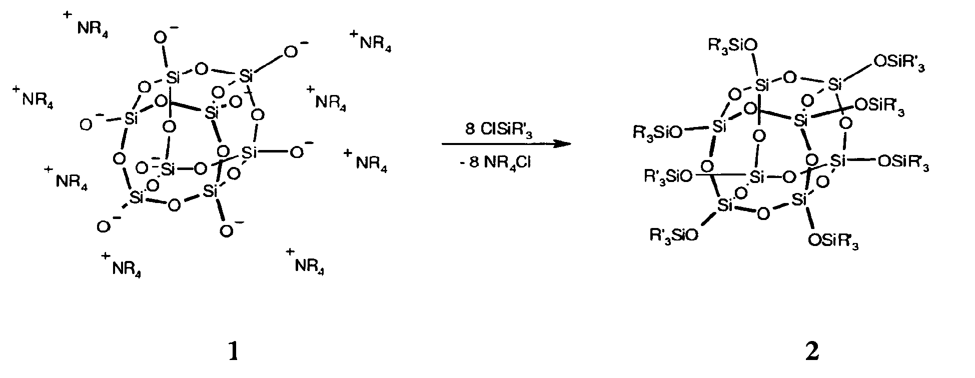

Sowohl die Silasesquioxane als auch die Sphärosilikate sind bei Temperaturen bis zu mehreren hundert Grad Celsius thermisch stabil.

Die polyedrischen oligomeren Silizium-Sauerstoffcluster (I) in dem erfindungsgemäßen Polyesterlack weisen vorzugsweise Substituenten vom Typ **X** auf, die eine Amino-, Hydroxy-, Carboxy-, Isocyanat-, Epoxy-, Polyether-, Alkoxysilyl-, Siloxy-, Alkylsiloxy-, Alkoxysiloxy- oder Alkoxysilylalkyl-Gruppe darstellen. Bevorzugt weisen die polyedrische oligomere Silizium-Sauerstoffcluster zumindest einen Substituenten vom Typ X, ausgewählt aus Amino- und Epoxygruppe, auf.

Aufgrund ihres molekularen Charakters besitzen die polyedrischen oligomeren Silizium-Sauerstoffcluster in den erfindungsgemäßen Polyesterlacken ein einheitliches und definiertes Molekulargewicht. In einer besonderen Ausführungsform weist der polyedrische oligomere Silizium-Sauerstoffcluster bevorzugt ein Molekulargewicht von mindestens 400 g/mol, besonders bevorzugt 400 bis 2500 g/mol und ganz besonders bevorzugt 600 bis 1.500 g/mol auf.

Die Molekülgröße der polyedrischen oligomeren Silizium-Sauerstoffcluster in den erfindungsgemäßen Polyesterlacken kann erhöht werden, indem man mehrere mit zwei reaktiven Gruppen **X** funktionalisierte polyedrische oligomere Silizium-Sauerstoffclustereinheiten mittels Kondensation z.B. über einen Spacer und/oder die funktionellen Gruppen des Substituenten vom Typ **X** verbindet. Des weiteren kann man eine Vergrößerung durch eine Homo- oder Copolymerisation erreichen. Der erfindungsgemäße Polyesterlack weist bevorzugt polyedrische oligomere Silizium-Sauerstoffcluster auf, die eine Molekülgröße von maximal 100 nm, bevorzugt von maximal 50 nm, besonders bevorzugt von maximal 30 nm und ganz besonders bevorzugt von maximal 20 nm aufweisen.

Es kann vorteilhaft sein, wenn der erfindungsgemäße Polyesterlack polyedrische oligomere Silizium-Sauerstoffcluster basierend auf der Struktur **3** aufweist 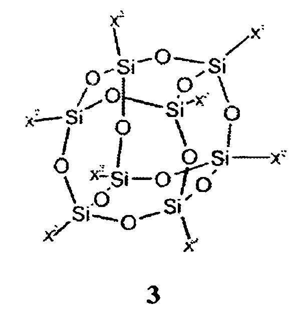 mit
- **X**^{**1**} =: Substituent vom Typ **X** oder vom Typ **-O-SiX**_{**3**}**, X**^{**2**} = Substituent vom Typ **X**, vom Typ **-O- SiX**_{**3**}**,** vom Typ **R,** vom Typ **-O-SiX**_{**2**}**R,** vom Typ **-O-SiXR**_{**2**} oder vom Typ **-O-SiR**_{**3**}**,**
- **R** =: Wasserstoffatom, Alkyl-, Cycloalkyl-, Alkenyl-, Cycloalkenyl-, Alkinyl-, Cycloalkinylgruppe oder Polymereinheit, die jeweils substituiert oder unsubstituiert sind oder weitere funktionalisierte polyedrische oligomere Silizium-Sauerstoffclustereinheiten, die über eine Polymereinheit oder eine Brückeneinheit angebunden sind,
- **X** =: Oxy-, Hydroxy-, Alkoxy-, Carboxy-, Silyl-, Alkylsilyl-, Alkoxysilyl-, Siloxy-, Alkylsiloxy-, Alkoxysiloxy-, Silylalkyl-, Alkoxysilylalkyl-, Alkylsilylalkyl-, Halogen-, Epoxy-, Ester-, Fluoralkyl-, Isocyanat-, blockierte Isocyanat-, Acrylat-, Methacrylat-, Nitril-, Amino-, Phosphin-, Polyethergruppe oder mindestens eine solche Gruppe vom Typ **X** aufweisenden Substituenten vom Typ **R**.

Die polyedrischen oligomeren Silizium-Sauerstoffcluster des erfindungsgemäßen Polyesterlackes sind vorzugsweise funktionalisiert, insbesondere stellt der polyedrische oligomere Silizium-Sauerstoffcluster ein Sphärosilikat gemäß der Formel

[(RₑX_{f}Si₂O_{2,5})ₒ (R_{g}XₕSi₂O₂)ₚ]

mit e, f, g = 0-3; h = 1-4; o+p ≥ 4; c+f = 3 und g+h = 4,
vorzugsweise jedoch ein funktionalisiertes oligomeres Sphärosilikat, bevorzugt jedoch ein Silasesquioxan gemäß der Formel

[(RₐX_{b}SiO_{1,5})ₘ (R_{c}X_{d}SiO)ₙ]

mit a, b, c = 0-1; d = 1-2; m+n ≥ 4; a+b = 1; c+d = 2.
besonders bevorzugt jedoch ein funktionalisiertes oligomeres Silasesquioxan dar. Ganz besonders bevorzugt sind solche, die auf oligomeren Silasesquioxanen gemäß den Strukturen **4, 5** oder **6** basieren, 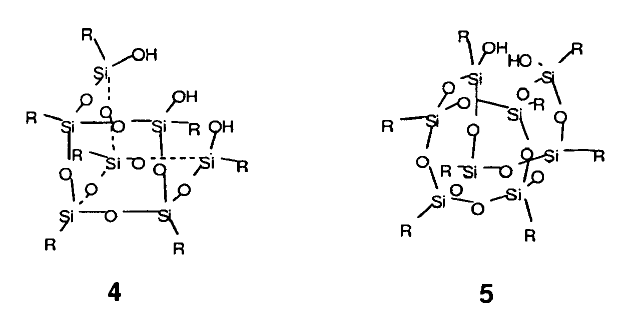 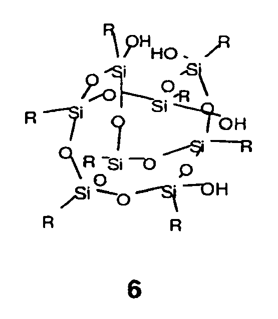 mit
- **R** =: Wasserstoffatom, Alkyl-, Cycloalkyl-, Alkenyl-, Cycloalkenyl-, Alkinyl-, Cycloalkinylgruppe oder Polymereinheit, die jeweils substituiert oder unsubstituiert sind oder weitere funktionalisierte oligomere Silasesquioxaneinheiten, die über eine Polymereinheit oder eine Brückeneinheit angebunden sind.

Das funktionalisierte oligomere Silasesquioxan kann durch die Umsetzung von Silasesquioxanen mit freien Hydroxy-Gruppen mit monomeren funktionalisierten Silanen der Struktur **Y**_{**3**}**Si-X**^{**1**}, **Y**_{**2**}**SiX**^{**1**}**X**^{**2**} und **YSiX**^{**1**}**X**^{**2**}**X**^{**3**} erhalten werden, wobei der Substituent **Y** eine Abgangsgruppe ist, ausgewählt aus Alkoxy-, Carboxy-, Halogen-, Silyloxy- oder Aminogruppe, die Substituenten **X**^{**1**}**, X**^{**2**} und **X**^{**3**} vom Typ **X** sind und gleich oder unterschiedlich sind, mit **X** = Oxy-, Hydroxy-, Alkoxy-, Carboxy-, Silyl-, Alkylsilyl-, Alkoxysilyl-, Siloxy-, Alkylsiloxy-, Alkoxysiloxy-, Silylalkyl-, Alkoxysilylalkyl-, Alkylsilylalkyl-, Halogen-, Epoxy-, Ester-, Fluoralkyl-, Isocyanat-, blockierter Isocyanat-, Acrylat-, Methacrylat-, Nitril-, Amino-, Phosphin-, Polyethergruppe oder mindestens eine solche Gruppe vom Typ **X** aufweisenden Substituenten vom Typ **R** und **R** = Wasserstoffatom, Alkyl-, Cycloalkyl-, Alkenyl-, Cycloalkenyl-, Alkinyl-, Cycloalkinylgruppe oder Polymereinheit, die jeweils substituiert oder unsubstituiert sind oder weitere funktionalisierte oligomere Silasesquioxaneinheiten, die über eine Polymereinheit oder eine Brückeneinheit angebunden sind.

Die Substituenten vom Typ **R** der Silasesquioxans können alle identisch sein, daraus ergibt sich eine sogenannte funktionalisierte homoleptische Struktur gemäß

[(RSiO_{1,5})ₘ (RXSiO)ₙ]

mit m + n = z und z ≥ 4, wobei z der Anzahl der Siliziumatome in der Gerüststruktur der polyedrischen oligomeren Silizium-Sauerstoffclustereinheit entspricht und
- **R =**: Wasserstoffatom, Alkyl-, Cycloalkyl-, Alkenyl-, Cycloalkenyl-, Alkinyl-, Cycloalkinylgruppe oder Polymereinheit, die jeweils substituiert oder unsubstituiert sind oder weitere funktionalisierte polyedrische oligomere Silizium-Sauerstoffclustereinheiten, die über eine Polymereinheit oder eine Brückeneinheit angebunden sind,
- **X** =: Oxy-, Hydroxy-, Alkoxy-, Carboxy-, Silyl-, Alkylsilyl-, Alkoxysilyl-, Siloxy-, Alkylsiloxy-, Alkoxysiloxy-, Silylalkyl-, Alkoxysilylalkyl-, Alkylsilylalkyl-, Halogen-, Epoxy-, Ester-, Fluoralkyl-, Isocyanat-, blockierte Isocyanat-, Acrylat-, Methacrylat-, Nitril-, Amino-, Phosphin-, Polyethergruppe oder mindestens eine solche Gruppe vom Typ **X** aufweisenden Substituenten vom Typ **R**, wobei sowohl die Substituenten vom Typ **R** gleich oder unterschiedlich sind als auch die Substituenten vom Typ **X** gleich oder unterschiedlich sind.

In einer weiteren Ausführungsform des erfindungsgemäßen Polyesterlackes können mindestens zwei der Substituenten vom Typ **R** des polyedrischen oligomeren Silasesquioxans verschieden sein, man spricht dann von einer funktionalisierten heteroleptischen Struktur gemäß

[(RSiO_{1,5})ₘ, (R'XSiO)ₙ]

mit m + n = z und z ≥ 4, wobei z der Anzahl der Siliziumatome in der Gerüststruktur der polyedrischen oligomeren Silizium-Sauerstoffclustereinheit entspricht und
- **R** =: Wasserstoffatom, Alkyl-, Cycloalkyl-, Alkenyl-, Cycloalkenyl-, Alkinyl-, Cycloalkinylgruppe oder Polymereinheit, die jeweils substituiert oder unsubstituiert sind oder weitere funktionalisierte polyedrische oligomere Silizium-Sauerstoffclustereinheiten, die über eine Polymereinheit oder eine Brückeneinheit angebunden sind,
- **X** =: Oxy-, Hydroxy-, Alkoxy-, Carboxy-, Silyl-, Alkylsilyl-, Alkoxysilyl-, Siloxy-, Alkylsiloxy-, Alkoxysiloxy-, Silylalkyl-, Alkoxysilylalkyl-, Alkylsilylalkyl-, Halogen-, Epoxy-, Ester-, Fluoralkyl-, Isocyanat-, blockierte Isocyanat-, Acrylat-, Methacrylat-, Nitril-, Amino-, Phosphin-, Polyethergruppe oder mindestens eine solche Gruppe vom Typ **X** aufweisenden Substituenten vom Typ **R**, wobei sowohl die Substituenten vom Typ **R** gleich oder unterschiedlich sind als auch die Substituenten vom Typ **X** gleich oder unterschiedlich sind.

Es kann ganz besonders vorteilhaft sein, wenn die polyedrischen oligomeren Silizium-Sauerstoffcluster des erfindungsgemäßen Polyesterlackes maximal einen Substituenten vom Typ **X** aufweisen. Insbesondere kann auf diese Weise verhindert werden, dass es beispielsweise zu unerwünschten Vernetzungen kommt.

Ganz besonders bevorzugt weist der erfindungsgemäße Polyesterlack funktionalisierte oligomere Silasesquioxane der Formel **7** 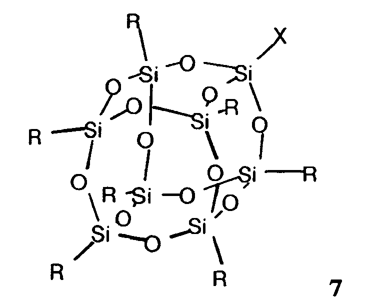 auf, insbesondere mit Amino- oder Epoxygruppen als Substituenten vom Typ **X.**

Die polyedrischen oligomeren Silizium-Sauerstoffcluster der erfindungsgemäßen Polyesterlacke können eine reaktionsfähige Gruppe enthalten, die beim Verfilmen des Lackes beispielsweise mit Polyesterharz **(A,D)** und/oder Vernetzer(n) **(B, C)** zur Reaktion gebracht werden. Dadurch können die polyedrischen oligomeren Silizium-Sauerstoffcluster in extrem feiner Verteilung, d.h. in Molekülstruktur, koordinativ oder kovalent in dem Lack gebunden werden.

Weiterer Gegenstand dieser Erfindung ist ein Verfahren zur Herstellung des erfindungsgemäßen Polyesterlackes, wobei die polyedrischen oligomeren Silizium-Sauerstoffcluster gelöst oder dispergiert in einem Lösemittel der Polyesterlackmischung zugegeben werden. Bevorzugt wird eine von 0,1 bis 15 Gew.%ige Lösung oder Dispersion der polyedrischen oligomeren Silizium-Sauerstoffcluster, besonders bevorzugt eine von 0,1 bis 5 Gew.-%ige Lösung oder Dispersion zugegeben. Die Herstellung der Lösung bzw. Dispersion der polyedrischen oligomeren Silizium-Sauerstoffcluster erfolgt vorzugsweise in dem für das Lacksystem jeweiligen bestimmten reinen Lösemittel in einer Konzentration von maximal 15 Gew.-%, bevorzugt von maximal 5 Gew.-% und in einer besonderen Ausführungsform von maximal 2 Gew.-% mittels eines Dissolver oder anderen in der Lackindustrie gebräuchlichen Rühraggregaten. Das Dispergieren des polyedrischen oligomeren Silizium-Sauerstoffclusters erfolgt vorzugsweise bei einer Temperatur von 10 bis 150°C, bevorzugt von 15 bis 80 °C, besonders bevorzugt von 20 bis 50°C. Vorzugsweise werden in dem erfindungsgemäßen Verfahren die polyedrischen oligomeren Silizium-Sauerstoffcluster in einem Lösemittel dispergiert, ausgewählt aus aliphatischen oder aromatischen Kohlenwasserstoffen mit einem Siedepunkt vorzugsweise von über 160 °C, bevorzugt von über 220 °C. In einer besonderen Ausführungsart des erfindungsgemäßen Verfahrens werden die polyedrischen oligomeren Silizium-Sauerstoffcluster in aromatischen Kohlenwasserstoffen, in Estern, insbesondere in Ethylethoxypropionat, Butylglykolacetat, Butyldiglykolacetat, Dibasic Ester Mixture (DBE), in Glykolethern, insbesondere Butylglykol, Butyldiglykol, Methyldipropylglykol, oder in Alkoholen, insbesondere Benzylalkohol, n-Butanol. Die Auswahl der Lösemittel richtet sich vor allem nach der Maßgabe, dass zum einen die polyedrischen oligomeren Silizium-Sauerstoffcluster (I) gelöst oder zumindest feindispergiert werden müssen und zum anderen die Feinpulver der kristallinen Copolyester (D) keine erhebliche Quellung erfahren dürfen, was sonst zum Eindicken der Polyesterlacke führt. Bevorzugt werden die polyedrischen oligomeren Silizium-Sauerstoffcluster in dem erfindungsgemäßen Verfahren in aromatischen Kohlenwasserstoffen mit Siedepunkten, die in einem Bereich ab 160 °C, insbesondere Solventnaphtha 100, besonders bevorzugt ab 185 °C, insbesondere Solventnaphtha 150 und ganz besonders bevorzugt ab 220 °C, insbesondere SOLVESSO 200 S, Exxon liegen, dispergiert.

Die kristallinen Copolyester (D) werden zu Feinpulver vermahlen. Die Vermahlung kann mit üblichen Mahlaggregaten erfolgen, beispielsweise mit Prallteller-, Stift- oder Luftstrahlmühlen, wenn nötig unter Tiefkühlung des Mahlgutes.

Des weiteren ist Gegenstand der Erfindung ein Verfahren zur Herstellung einer Dickschichtlackierung, dadurch gekennzeichnet, dass ein erfindungsgemäßer Polyesterlack eingesetzt wird.

Die erfindungsgemäßen Polyesterlacke können in dem erfindungsgemäßen Verfahren mit den bekannten großtechnischen Auftragsverfahren für Flüssiglacke auf Bänder lackiert werden, z. B. mit Walzlackiermaschinen. Mit üblichen Bandgeschwindigkeiten von Hochleistungsanlagen (Trockner-Verweilzeiten bis minimal 20 Sekunden) lassen sich in einem Arbeitsgang bzw. Trockner-Durchlauf Filmschichtstärken von 50 bis 120 µm auftragen. Dies stellt einen deutlichen Schritt über die bisher mit Bandbeschichtungen auf Polyester- bzw. Polyester-Polyurethan-Basis bekannte Grenze der maximal möglichen Filmschichtstärke bei ca. 65 µm dar. Die erfindungsgemäßen Polyesterlacke lassen sich mit sehr guter Schichtstärkekonstanz verarbeiten. Farbtonwechsel auf der Beschichtungsanlage können problemlos erfolgen.

Die in den Lösemitteln gelösten Basis-Bindemittel, bestehend aus Polyesterharzen (A), blockierten Polyisocyanatharzen (B) oder Triazinharzen (C), vermischen sich bei der thermischen Verfilmung molekular mit den kristallinen Copolyestern (D) aus den in den erfindungsgemäßen Polyesterlacken suspendierten Feinpulvern in der Weise, dass diese spätestens nach Überschreiten der Schmelztemperatur der kristallinen Copolyester sich in der Mischung der Basisbindemittel auflösen. Die kristallinen Copolyester reagieren mittels ihrer Hydroxy-Endgruppen ebenso mit den Vernetzerharzen wie die in Lösung eingesetzten Polyesterharze (A).Weiterhin können bei der thermischen Verfilmung die polyedrischen oligomeren Silizium-Sauerstoffcluster (I) mit den Polyesterharzen (A) und (D) oder den Vernetzern (B) und/oder (C) reagieren, sofern sie eine geeignete reaktive Gruppe tragen. Es hängt von verschiedenen Faktoren, wie z.B. dem Kristallisationsgrad der Copolyester (D), deren Mengenverhältnis zum Basisbindemittel (bestehend aus (A), (B) und/oder (C)), ggf. deren Mengenverhältnis zum Silizium-Sauerstoff-Cluster (I) bzw. von der Abkühlgeschwindigkeit des erfindungsgemäß beschichteten metallischen Substrats ab, in welchem Ausmaß sich beim Abkühlen und Erstarren der Beschichtung kristalline Strukturen in der Beschichtung einstellen, äußerlich an unpigmentierten Lackfilmen durch "Weiß-Anlaufen" erkennbar.

Es ist erfindungswesentlich, dass sich die vor der thermischen Verfilmung in Suspension isolierten Copolyester-Partikel bei der Hitzehärtung der erfindungsgemäßen Polyesterharze bei dem erfindungsgemäßen Verfahren zumindest in der äußeren Partikelschale molekular auflösen und dass sich beim Abkühlen und Erstarren der Dickschichtlackierungen keine neuen inneren Phasengrenzen mehr ausbilden, etwa zwischen sich aussondernden Copolyester-Partikeln und der umgebenden Basisbindemittel-Phase. Eine wesentliche Voraussetzung hierfür ist die Verträglichkeit bzw. Mischbarkeit der hydroxylgruppenhaltigen Polyesterharze (A) und der kristallinen Copolyester (D), welche derselben Klasse der gesättigten Polyester (SP, saturated polyester) angehören.

Es ist erfindungswesentlich, dass das Pigmentieren der in den Lösemitteln gelösten Basisbindemittel, bestehend aus Polyesterharzen (A) und Vernetzerharzen, durch Dispergieren der Pigmente mit den in der Lackindustrie üblichen Mahlaggregaten (z.B. Perlmühlen) unproblematisch ist, so dass Wahl und Feineinstellung von Farbtönen bei den erfindungsgemäßen Dickschichtlackierungen keinerlei Einschränkungen unterliegt.

Die Aushärtung der Polyesterlacke erfolgt in dem erfindungsgemäßen Verfahren vorzugsweise mittels der Bandbeschichtung mit Metall-Objekt-Temperaturen im Bereich von 190 bis 250 °C mit Trockner-Verweilzeiten im Bereich von 20 bis 70 Sekunden.

Beispiele für metallische Substrate, die mittels dem erfindungsgemäßen Verfahren beschichtet werden können, sind Bänder aus Stahl bzw. Zink- oder Aluminium/Zink-metallisiertem Stahl oder aus Aluminium. Die Metalloberflächen sind nach üblichen Verfahren gemäß dem Stand der Technik vorbehandelt (z.B. Chromatierung, alkalische Oxidation, Phosphatierungen, anodische Oxidation) als wichtige Voraussetzung für einen möglichst widerstandsfähigen Verbund zwischen Metall und organischer Beschichtung.

Die erfindungsgemäßen Polyesterlacke können in dem erfindungsgemäßen Verfahren ein- und mehrschichtig zum Einsatz kommen. Bevorzugt werden die erfindungsgemäßen Polyesterlacke in dem erfindungsgemäßen Verfahren als Dickschicht-Decklacke auf üblichen Primern, einschichtig als Dickschicht-Decklacke oder als Dickschicht-Primer eingesetzt. Als Decklackierungen von Primer /Decklack-Systemen benötigen sie keine speziellen Primer, wie z.B. PVC-Plastisol-Decklacke, deren Weichmacher-Bestandteile ungeeignete Primer durch Quellung zerstören können (Haftungsverlust auf metallischern Substrat). Die erfindungsgemäßen Polyesterlacke können auch als Dickschicht-Primer mit Schichtstärken im Bereich von 15 bis 30 µm in dem erfindungsgemäßen Verfahren zum Einsatz kommen, welche mit den auf dem Coil-Coating-Gebiet üblichen Decklacken auf Basis Polyester, Polyester-Polyurethan, aber auch auf Basis Polyvinylidenfluorid (PVDF) überlackiert werden können. Schließlich können die erfindungsgemäßen Polyesterlacke auch einschichtig auf Aluminium-Bänder lackiert werden.

Erfindungsgemäß mit Feinpulvern kristalliner Copolyester (D) formulierte Polyester-Polyurethan-Dickschicht-Systeme zeigen die beste Verformbarkeit auf metallischen Substraten in der Weise, dass nach starker Umformung vorbeschichteter Bänder ein Minimum an Rissbildung in der Dickschichtlackierung feststellbar ist.

Die erfindungsgemäßen Dickschichtlackierungen hergestellt gemäß dem erfindungsgemäßen Verfahren weisen eine Schichtdicke von 50 bis 120 µm, bevorzugt von 70 bis 100 µm auf. Des weiteren weisen die erfindungsgemäßen Dickschichtlackierungen sehr gute mechanische Eigenschaften auf, hervorzuheben sind besonders die sehr gute Verformbarkeit und Abriebfestigkeit. Entsprechend den erfindungsgemäß enzielbaren Schichtstärken wird ein sehr guter Korrosionsschutz metallischer Substrate auch nach starker Umformung und anschließender Korrosionsbelastung im praktischen Einsatz erreicht. Die Witterungsbeständigkeit der erfindungsgemäßen Polyester-Dickschichtlackierungen ist gegenüber dem Stand der Technik auf Basis von PVC-Plastisolen deutlich verbessert. Aufgrund der vernetzten Struktur der erfindungsgemäßen Polyesterlacke ist bei höheren Objekttemperaturen im Außeneinsatz unter Sonnenbestrahlung ein thermoplastisches Fließen unterbunden, welches den Einsatz von PVC-Plastisol-beschichteten Blechen z.B. unter tropischen Klimabedingungen ausschließt. Erfindungswesentlich ist schließlich auch, dass die Entsorgung (Recycling) von Blechen mit Dickschichtlackierungen auf Polyester-Basis unproblematisch ist.

Beispiele für industrielle Erzeugnisse, welche aus erfindungsgemäß vorbeschichteten metallischen Bändern hergestellt werden können, sind in der Bauindustrie Fassaden- und Dachverkleidungen für den Außeneinsatz sowie Anwendungen in der Innen-Architektur (z. B. Trennwände, abriebfest beschichtete Innenverkleidungen von Aufzugskabinen etc.), in der allgemeinen Industrie Beschichtungen mit gutem Korrosionsschutz (z.B. für Geräteverkleidungen), in der Autoindustrie z.B. für die Vorbeschichtung von Stahl- oder Aluminium-Blechen, welche nach Umformen weiter beschichtbar sind.

Die nachfolgenden Beispiele sollen die erfindungsgemäßen Polyesterlacke näher erläutern, ohne dass die Erfindung auf diese Ausführungsform beschränkt sein soll. Gegebenenfalls gemachte Angaben von Anteilen und Prozentsätzen beziehen sich generell auf das Gewicht der angegebenen Lackrohstoffe.

### Beispiele

### 1. Herstellung der polyedrischen oligomeren Silizium-Sauerstoffcluster (I)

### Synthese von (Isobutyl)₈Si₈O₁₂ (I1)

Zu einer Lösung von 446 g (2,5 mol) Isobutyltrimethoxysilan (Isobutyl)Si(OCH₃)₃ (DYNASYLAN® IBTMO, Degussa AG) in 4300 ml Aceton wird unter Rühren eine Lösung von 6,4 g (0,11 mol) KOH in 200 ml Wasser gegeben. Das Reaktionsgemisch wird daraufhin 3 Tage bei 30 °C gerührt. Der entstehende Niederschlag wird abfiltriert und bei 70 °C im Vakuum getrocknet. Das Produkt (Isobutyl)₈Si₈O₁₂ wird in einer Ausbeute von 262 g erhalten.

### Synthese von (Isobutyl)₇Si₇O₉(OH)₃ (I2)

Bei einer Temperatur von 55 °C werden 55 g (63 mmol) (Isobutyl)₈Si₈O₁₂ in 500 ml eines Aceton-Methanol-Gemisches (Volumenverhältnis 84 : 16) gegeben, welches 5,0 ml (278 mmol) H₂O und 10,0 g (437 mmol) LiOH enthält. Das Reaktionsgemisch wird daraufhin 18 h bei 55 °C gerührt und danach zu 500 ml ln Salzsäure gegeben. Nach 5 Minuten Rühren wird der erhaltene Feststoff abfiltriert und mit 100 ml Methanol gewaschen. Nach Trocknen an Luft werden 54,8 g (Isobutyl)₇Si₇O₉(OH)₃ erhalten.

### Synthese von (3-Aminopropyl)(Isobutyl)₇Si₈O₁₂ (13)

Zu einer Lösung von 20 g (25,3 mmol) (Isobutyl)₇Si₇O₉(OH)₃ (12) in 20 ml Tetrahydrofuran werden bei 20°C 4,67 g (26 mmol) 3-Aminopropyltriethoxysilan (DYNASYLAN® AMEO, Degussa AG) gegeben. Anschließend wird über Nacht gerührt. Die Reaktionslösung wird daraufhin innerhalb von 3 Minuten mit 100 ml Methanol versetzt. Nach dem Abfiltrieren und Waschen mit Methanol sowie anschließendem Trocknen werden 17 g (3-Aminopropyl)(lsobutyl)₇Si₈O₁₂ (77 % Ausbeute) als weißes Pulver erhalten.

### Synthese von 3-Glycidoxypropyl)(Isobutyl)₇Si₈O₁₂ (I4)

Zu einer Lösung von 50 g (63 mmol) (Isobutyl)₇Si₇O₉(OH)₃ (I2) in 50 ml Tetrahydrofuran werden bei 20°C 15,2 g (64,3 mmol) (3-Glycidoxypropyl)trimethoxysilan (DYNASYLAN® GLYMO, Degussa AG) gegeben. Nach Zugabe von 2,5 ml Tetraethylammoniumhydroxid-Lösung (35 Gew.-% Tetraethylammoniumhydroxid in Wasser, 6 mmol Base, 90 mmol Wasser) wird über Nacht gerührt. Nach Entfernen von ca. 15 ml Tetrahydrofuran resultiert eine weiße Suspension. Durch langsame Zugabe von 250 ml Methanol innerhalb von 30 Minuten erfolgt die weitere Ausfällung des Produkts. Nach dem Abfiltrieren wird der verbleibende Feststoff mit Methanol gewaschen. Nach Trocknen erhält man 46 g (3-Glycidoxypropyl) (Isobutyl)₇Si₈O₁₂ (78 % Ausbeute) als weißes Pulver.

### 2. Eingesetzte in Lösemitteln lösliche, Hydroxygruppen-haltige Polyesterharze (A)

**(A1)** ist ein mittelmolekulares, lineares, hydroxy-gruppenhaltiges, gesättigtes Polyesterharz mit Hydroxylzahl 20 (mg KOH/g), Säurezahl max. 3 (mg KOH/g), Molmasse 6000 (g/mol/, Zahlenmittel), Glasumwandlungstemperatur 10 - 15 °C, Lieferform 50 Gew.-% in SOLVESSO 200 S (Exxon).
**(A2)** ist ein niedermolekulares, lineares, hydroxy-gruppenhaltiges, gesättigtes Polyesterharz mit Hydroxylzahl 50 (mg KOH/g), Säurezahl max. 5 (mg KOH/g), Molmasse 2000 (g/mol, Zahlenmittel), Glasumwandlungstemperatur 10 - 15 °C, Lieferform 70 Gew.-% in SOLVESSO 100 (Exxon)/ Butylglykol (80/20).

### 3. Feinpulver von kristallinen Copolyestern (D)

| | **Beschreibung** | **Molmasse** | **Glas-** | **Schmelz-** |
|---|---|---|---|---|
| | | (in g/mol, Zahlenmittel) | **temperatur** | **temperatur** |
| D1 | Hochmolekular | 20 000 | 35 - 40 °C | 190 - 195 °C |
| | Basis Terephthalsäure/1,4-Butandiol | | | |
| D2 | Hochmolekular | 25 000 | ca. 40 °C | ca. 220 °C |
| | Polybutylenterephthalat | | | |
| D3 | Mittelmolekular | 9 000 | 35 - 40 °C | 190 - 195 °C |
| | Basis Terephthalsäure/1,4-Butandiol | | | |
| D4 | Hochmolekular | 30 000 | 25 - 30 °C | 190 - 195 °C |
| | (Basis Terephthalsäure/Monoethylenglykol) | | | |
| D5 | Hochmolekular | 25 000 | 20-25 °C | 100 - 105 °C |
| | (Basis Terephthalsäure/1,4-Butandiol) | | | |
| D6 | Hochmolekular | 20 000 | - 25 bis - 30 °C | 145 - 150 °C |
| | (Basis Terephthalsäure/1,4-Butandiol) | | | |

Die handelsüblichen Copolyester (D1), (D2), (D4), (D5) und (D6) werden als kristallin weißes Granulat auf tiefe Temperatur (Flüssig-Stickstoff) gekühlt und mit hierfür geeigneten Mahlaggregaten (z.B. auf einer Stiftmühle) zu Feinpulvern vermahlen, Korngröße beträgt anschließend maximal 63 µm. Für das Beispiel 4 wurde Feinpulver mit einer Korngröße max. 53 µm hergestellt.

### 4. Herstellung des erfindungsgemäßen Polyesterlackes

### Beispiel 1:

25,0 Gewichtsteile von Polyesterharz (A1) als 50 Gew.-%ige Lösung in SOLVESSO 200 S (Exxon) werden mit 3,0 Gewichtsteilen SOLVESSO 200 S verdünnt und mit 15,0 Gewichtsteilen Titandioxid-Pigment (KRONOS 2330) und mit 2,0 Gewichtsteilen eines mineralischen Antiabsetzmittets (BENTONE 34/ 10 Gew.-% in Xylol/Propylencarbonat = 87/03) mit einem Dissolver vordispergiert. In einer Perlmühle wird die vordispergierte Pigmentpaste anschließend auf eine Mahlfeinheit (Pigment-Teilchengröße) von ca. 10 - 12 µm vermahlen. Danach wird mit 2,0 Gewichtsteilen Polyesterharz (A1) aufgelackt. Unter laufendem Dissolver werden anschießend 28,0 Gewichtsteile Feinpulver von Copolyester (D1) eingetragen. Nach vollständiger Homogenisierung des Halbfabrikates werden 0,8 Gewichtsteile eines entlüftungs- und entschäumungsfördernden Additivs zugesetzt sowie 4,0 Gewichtsteile eines handelsüblichen, blockierten cycloaliphatischen Polyisocyanatharzes (VESTANAT B 1481/65 % Lff., NCO-Gehalt 8,5 %, Degussa AG). Danach werden 0,1 Gewichtsteile, der zuvor 30 min bei 40 °C in 10 Gewichtsteilen SOLVESSO 200 S dispergierten, polyedrischen oligomeren Silizium-Sauerstoffclustereinheit (I1) eingerührt.

Mit 2,0 Gewichtsteilen n-Butanol, vorgenannter Dispersion sowie 8,1 Gewichtsteilen SOLVESSO 200 S wird der Polyesterlack auf Verarbeitungsviskosität (40 - 50 Sekunden. Auslaufzeit, 6 mm-Becher, in Anlehnung an DIN 53 211) verdünnt. Die vollständige Rezeptur dieses und weiterer Beispiele findet sich in Tabelle I.

Für die Laborprüfung und lacktechnische Beurteilung wird der Polyesterlack mit einer Spiralrakel auf Aluminium-Prüfbleche aufgezogen und in einem elektrisch beheizten Labor-Umluftofen (Lufttemperatur z. B. 340 °C) thermisch verfilmt und gehäriet, wobei in diesem und weiteren Beispielen eine Metallobjekttemperatur von 250 - 260 °C eingehalten wurde (Ofenverweilzeit abhängig von der Blechdicke).

### 5. Prüfungen

Die nach diesem und den weiteren Beispielen erhaltenen Dickschicht-Polyesterlacke wurden folgenden Prüfungen unterzogen.

### a) Nichtflüchtige Anteile

1 g Nasslack wird auf einem Blechdeckel (∅ 7cm) eingewogen und gleichmäßig auf der Deckelfläche verteilt. Bei 180°C Umluftofen-Temperatur wird 60 Minuten getrocknet und anschließend rückgewogen.

### b) Oberflächen-Struktur

Die Oberfläche der Dickschicht-Lackierung wird visuell beurteilt:
G= glänzend, S= seidenglänzend, M= matt, R= rauh

### c) Maximal erzielbare Schichtstärke

Durch Stichversuche mit Spiralrakeln verschiedener Größe bzw. resultierender Naßschichtdickc der aufgerakelten Nasslacke wird diejenige Trockenschichtdicke nach Schocktrocknung (Objekttemperatur 250 - 260 °C) ermittelt, bis zu der die Dickschichtlackierung keine Oberflächenstörungen zeigt (Kocher, Nadelstiche).
Die Prüfung b) sowie die nachfolgend beschriebenen Prüfungen wurden einheitlich mit Trockenschichtdicken im Bereich 60 - 65 µm durchgeführt. Die erhaltenen Prüfresultate sind vom Typ und Vorbehandlung der Prüfbleche abhängig. Die in Tabelle II zusammengestellten Prüfresultate wurden an Prüflacken auf Aluminiumblechen, Dicke 0,58 mm, vorbehandelt durch Chromatierung gefunden.

### d) T-bend-Test

Diese Elastizitätsprüfung wird nach ECCA*-Vorschrift "T 20" durchgeführt. Eine beschichtete Blechprobe wird bei Raumtemperatur um 180° vorgebogen und mittels einer Presse zunächst ohne Blech-Zwischenlage mit maximaler Außendehnung der Beschichtung zu einer "0 T"-Biegung verformt. Weitere 180°-Biegungen ergeben Biegeschultern mit Biegeradius "0,5T" (T = thickness = Blechdicke), "1 T" etc. Ermittelt wird der kleinstmögliche Biegeradius, bei dem an der Biegeschulter noch keine Risse in der Beschichtung erkennbar sind.

### e) T-bend-Kochtest

Die Prüfung d) wird verschärft, indem die Blech-Biegeproben vor Beurteilung in kochendes Wasser getaucht werden (2 Minuten). Hierbei kommt es in der Regel zu stärkerer Rissbildung als bei Prüfung d).

### f) T-bend-Kältetest

Wie Prüfung d), jedoch erfolgt die Prüfung an kalten Blechproben, die vor Prüfung bei 0 - 5 °C gelagert wurden. Auch diese Prüfung ergibt in der Regel stärkere Rissbildung als Prüfung d).

### g) Impact-Test

Prüfung auf Schlagverformbarkeit nach ECCA* Vorschrift "T 5". Eine beschichtete Blechprobe wird mit einer Stahlkugel (∅ 1.27cm ,½ Zoll) an der Spitze eines Fallhammers (Masse 0,9 kg, Fallhöhe variabel) so schtagverformt, dass die Beschichtung nach außen umgeformt wird. An der verformten Stelle wird die Beschichtung auf Risse und Haftung geprüft (Bewertung : 1= keine Risse , 4= starke Rissbildung).

### h) Einschichthaftung

Diese Prüfung wird mit einem scharfschneidigen Messer durchgeführt. Mit möglichst großer Auflagekraft wird mit dem Messer versucht, die Beschichtung vom Blechuntergrund abzukratzen (Bewertung: 1 = Abkratzen vom Blechuntergrund unmöglich, Messer hebt nur Späne aus dem Lackfilm, 4 = Trennung Lackfilm vom Blech leicht möglich).

### i) Abdruckfestigkeit

Diese Prüfung wird in einer Presse durchgeführt, welche in einem Laborofen bei 50°C aufgestellt wird. Die in Tabelle II angegebenen Resultate wurden nach 16 Std. Anpressen von Prüflack gegen Blech unter einem Druck von 1 bar (1kp/cm²) gefunden (Bewertung: 1 = keine Abdrücke, 4 = starke Abdrücke bzw. Kleben der Beschichtung am Gegenblech).
(* Prüfmethode der European Coil Coating Association)

### Beispiele 2 bis 10:

Die übrigen Polyesterlacke werden analog zu Beispiel 1 hergestellt (Rezepturen siehe Tabelle I).

Der Polyesterlack nach Beispiel 2 unterscheidet sich von Beispiel 1 dadurch, dass als Vernetzerharz 1,5 Gewichtsteile CYMEL 303 (Cytec) verwendet werden.

Das Beispiel 3 unterscheidet sich von Beispiel 1 dadurch, dass der Polyesterlack kein Vernetzungsmittel enthält.

Im Polyesterlack nach Beispiel 4 wird Feinpulver von Copolyester (D1) abweichend von den anderen Beispielen mit geringerer Korngröße (max. 53 µm) eingesetzt.

Die Beispiele 5 bis 8 beschreiben Variationen von Copolyestern (D2), (D4), (D5) und (D6) als Feinpulver-Basis.

Das Beispiel 9 unterscheidet sich von Beispiel 1 dadurch, dass abweichend auch von den anderen Beispielen als Basis des Feinpulvers ein Copolyester mit niedrigerer Molmasse zum Einsatz kommt.

Das Beispiel 10 unterscheidet sich von Beispiel I dadurch, dass abweichend auch von den anderen Beispielen als lösliches Polyesterharz (A2) ein niedermolekulares hydroxylgruppenreiches Polyesterharz zum Einsatz kommt.

Die Laborprüfung und lacktechnische Beurteilung der Beschichtungen nach den Beispielen 2 bis 10 erfolgte analog zum Beispiel 1. Die Prüfresultate sind in Tabelle II zusammengestellt.

### Vergleichsbeispiele I bis III:

Die konventionellen Polyester-Einbrennlacke auf Basis der Polyesterharze (A1) bzw. (A2) werden auf übliche Weise hergestellt, indem die Polyesterharzlösungen mit SOLVESSO 200 S verdünnt werden und in einer Perlmühle das Titandioxid-Pigment (KRONOS 2330) auf eine Mahlfeinheit von ca. 10- 12 µm vermahlen wird. Anschließend werden unter laufendem Dissolver Additive und Vernetzerharz zugesetzt. Danach wird der Lack mit Verdünner auf Verarbeitungsviskosität (z.B. 110 - 130 Sekunden Auslaufzeit, 4 mm-Becher, DIN 53211) eingestellt. Die vollständigen Rezepturen der Beispiele I bis III finden sich in Tabelle 1, die Prüfresultate der Laborprüfungen in Tabelle II.

Die Vergleichsbeispiele zeigen, dass nach dem Stand der Technik bislang bei Polyester-Einbrennlacken in einem Arbeitsgang Filmsshichtdicken allenfalls bis max. 65 µm erzielt werden können, während bei den erfindungsgemäßen Polyesterlacken zum einen die Eigenschaften des Lackfilms beibehalten, teilweise sogar verbessert werden und zum andern die Schichtdicken deutlich über 65 µm liegen.

**Tabelle I**

| **Beispiele** | **1** | **2** | **3** | **4** | **5** | **6** | **7** | **8** | **9** | **10** | **I** | **II** | **III** |
|---|---|---|---|---|---|---|---|---|---|---|---|---|---|
| Polyesterharz (A 1) 50 % | 27.0 | 27.0 | 27.0 | 29.3 | 27.0 | 31.0 | 31.0 | 29.3 | 27.0 | - | 27.0 | 27.0 | |
| Polyesterharz (A 2) 70 % | | | | | | | | | | 22.5 | - | - | 22.5 |
| SOLVESSO 200S S | 3.0 | 3.0 | 3.0 | 3.3 | 3.0 | 3.4 | 3.4 | 3.3 | 3.0 | 8.5 | 3.0 | 3.0 | 8.5 |
| TiO₂ (KRONOS 2330) | 15.0 | 15.0 | 15.0 | 16.3 | 15.0 | 17.2 | 17.2 | 16.3 | 15.0 | 15.0 | 15.0 | 15.0 | 15.0 |
| BENTONE 34/10% | 2.0 | 2.0 | 2.0 | 2.2 | 2.0 | 2.3 | 2.3 | 2.2 | 2.0 | 2.0 | 2.0 | 2.0 | 2.0 |
| Copolyester (D 1) | 28.0 | 28.0 | 28.0 | - | - | - | - | - | - | 28.0 | 28.0 | - | 28.0 |
| (D 1) * | - | - | - | 210 | - | - | - | - | - | - | - | - | - |
| (D 2) | - | - | - | - | 28.0 | - | - | - | - | - | - | 28.0 | - |
| (D 4) | - | - | - | - | - | 17.0 | - | - | - | - | - | - | - |
| (D 5) | - | - | - | - | - | - | - | - | - | - | - | - | - |
| (D 6) | - | - | - | - | - | - | 17.0 | 22.0 | - | - | - | - | - |
| (D 3) | - | - | - | - | - | - | - | | 28.0 | - | - | - | - |
| Additiv | 0.8 | 0.8 | 0.8 | 0.8 | 0.8 | 0.8 | 0.8 | 0.8 | 0.8 | 1.0 | 0.8 | 0.8 | 1.0 |
| VESTANAT B 1481/65 % | 4.0 | | | 4.3 | 4.0 | 4.6 | 4.6 | 4.3 | 4.0 | 6.0 | 4.0 | 4.0 | 6.0 |
| CYMEL 303 | | 1,5 | - | - | - | - | - | - | - | - | - | - | - |
| Polyedrische oligomere | 0,1 | 0,1 | 2,0 | 2,0 | 1.0 | 3,0 | 2.0 | 2.0 | 2.0 | 1.0 | - | - | - |
| Silizium-Sauerstoffcluster | (I 1) | (I 2) | (I 3) | (I 4) | (I 4) | (I 4) | (I 4) | (I 4) | (I 4) | (I 4) | | | |
| n-Butanol | 2.0 | 2,0 | 2.0 | 2.0 | 2.0 | 2.0 | 2.0 | 2.0 | 2.0 | - | 2.0 | 2.0 | - |
| SOLVESSO 200 S | 18.1 | 20.6 | 20.2 | 17.8 | 17.2 | 18.7 | 19.7 | 17.5 | 16.2 | 16.0 | 18.2 | 18.2 | 17.0 |

| | | | | | | | | | | | | | |
|---|---|---|---|---|---|---|---|---|---|---|---|---|---|
| * Mahlfeinheit max. 53 µm (sonst alle Feinpulver mit max. 63 µm) | | | | | | | | | | | | | |

**Tabelle II**

| | | | | | | | | | | | | | |
|---|---|---|---|---|---|---|---|---|---|---|---|---|---|
| **Beispiele** | **1** | **2** | **3** | **4** | **5** | **6** | **7** | **8** | **9** | **10** | **I** | **II** | **III** |
| Polyesterharz (A) | A 1 | A 1 | A 1 | A 1 | A 1 | A 1 | A 1 | A 1 | A 1 | A 2 | A 1 | A 1 | A 2 |
| Vernetzerharz (B oder C) | B | C | | B | B | B | B | B | B | B | B | B | B |
| Copolyester (D) | D 1 | D 1 | D 1 | D 1 * | D 2 | D 4 | D 5 | D 6 | D 3 | D 1 | D 1 | D 2 | D 1 |
| Prüfresultate: | | | | | | | | | | | | | |
| a. nicht flüchtige Anteile | 58 | 57 | 55 | 56 | 59 | 54 | 54 | 57 | 59 | 63 | 59 | 59 | 63 |
| b. Oberflächen Struktur | S | S | S | S | S | S | S | S | G | S | S | S | S |
| c. max. erzielbare | **71** | **75** | **72** | **77** | **76** | **70** | **85** | **71** | **80** | **78** | **60** | **60** | **65** |
| Schichtstärke | | | | | | | | | | | | | |
| d.T-bend-Test (Risse) | 0 T | 0 T | 0 T | 0 T | 0 T | 0 T | 0 T | 0 T | 0 T | 0 T | 0 T | 0 T | 0 T |
| e. T-bend-Kochtest | 0,5 T | 1,0 T | 2 T | 0,5 T | 1,5 T | 0,5 T | 0 T | 0,5 T | 0,5 T | 0,5 T | 0,5 T | 2,5 T | 0,5 T |
| f. T-bend-Kältetest | 0 T | 0,5 T | 1 T | 1 T | 1,5 T | 0,5 T | 0,5 T | 0 T | 0 T | 0 T | 0 T | 1,5 T | 0 T |
| g. Impact Test | 1 | 1 | 1 | 1 | 1 | 1 | 1 | 1 | 1 | 2 | 1 | 4 | 2 |
| h. Einschichthaftung | 1 | 1 | 1 | 1 | 1 | 1 | 1 | 1 | 1 | 1 | 1 | 1 | 1 |
| i. Abdruckfestigkeit | 1 | 1 | 3 | 1 | 2 | 2 | 3 | 2 | 1 | 1 | 1 | 4 | 1 |

| | | | | | | | | | | | | | |
|---|---|---|---|---|---|---|---|---|---|---|---|---|---|
| * Mahlfeinheit max. 53 µm (sonst alle Feinpulver mit max. 63 µm) | | | | | | | | | | | | | |

## Patentansprüche

1. Polyesterlack für Dickschichtlackierungen, im wesentlichen enthaltend
A) 10 bis 45 Gew.-% mindestens eines gelösten, linearen und/ oder schwach verzweigten amorphen Polyesters,
B) 0,5 bis 20 Gew.-% mindestens eines blockierten Polyisocyanatharzes und/oder
C) 0 bis 15 Gew.-% mindestens eines Triazinharzes,
D) 10 bis 50 Gew.-% Feinpulver von kleiner 150 µm Korngröße mindestens eines hochmolekularen kristallinen Copolyesters in Suspension, mit einer Molmasse von 10 000 bis 50 000 g/mol und einer geringer Quellbarkeit in Lösemitteln,
E) 0 bis 20 Gew.-% Pigmente und anorganische Füllstoffe,
F) 0 bis 1 Gew.-% mindestens eines Katalysators,
G) 0 bis 5 Gcw.-% mindestens eines Additives,
H) 25 bis 45 Gew.-% organischer Lösemittel mit einem Siedepunkt über 160 °C und
I) 0,01 bis 5 Gew.-% polyedrischer oligomerer Silizium-Sauerstoffcluster, gemäß der Formel
[(RₐX_{b}SiO_{1,5})ₘ (R_{c}X_{d}SiO)ₙ (R_{c}X_{f}Si₂O_{2,5})ₒ (R_{g}XₕSi₂O₂)ₚ]
mit:
a, b, c = 0-1; d = 1-2; e, g, f = 0-3; h = 1-4;
m+n+o+p ≥ 4; a+b = 1; c+d = 2; e+f = 3 und g+h = 4;
**R** = Wasserstoffatom, Alkyl-, Cycloalkyl-, Alkenyl-, Cycloalkenyl-, Alkinyl-, Cycloalkinyl-, Aryl-, Heteroarylgruppe oder Polymereinheit, die jeweils substituiert oder unsubstituiert sind, oder weitere funktionalisierte polyedrische oligomere Silizium-Sauerstoffclustereinheiten, die über eine Polymereinheit oder eine Brückeneinheit angebunden sind,
X = Oxy-, Hydroxy-, Alkoxy-, Carboxy-, Silyl-, Alkylsilyl-, Alkoxysilyl-, Siloxy-, Alkylsiloxy-, Alkoxysiloxy-, Silylalkyl-, Alkoxysilylalkyl-, Alkylsilylalkyl-, Halogen-, Epoxy-, Ester-, Fluoralkyl-, Isocyanat-, blockierte Isocyanat-, Acrylat-, Methacrylat-, Nitril-, Amino-, Phosphingruppe oder mindestens eine solche Gruppe vom Typ **X** aufweisenden Substituenten vom Typ **R**,
wobei die sowohl die Substituenten vom Typ **R** als auch vom Typ **X** gleich oder unterschiedlich sind.

2. Polyesterlack nach Anspruch 1 ,
**dadurch gekennzeichnet,**
**dass** als polyedrische oligomere Silizium-Sauerstoffcluster (Komponente I) funktionalisierte Silasesquioxane enthalten sind.

3. Polyesterlack nach Anspruch 2,
**dadurch gekennzeichnet,**
**dass** die funklionalisierten Silasesquioxane zumindest eine Epoxy-Gruppe als Substituent vom Typ X aufweisen.

4. Polyesterlack nach Anspruch 2,
**dadurch gekennzeichnet,**
**dass** die funktionalisierten Silasesquioxane zumindest eine Amino-Gruppe als Substituent vom Typ X aufweisen.

5. Polyesterlack gemäß zumindest einem der Ansprüche 1 bis 4,
**dadurch gekennzeichnet,**
**dass** die Massenzunahme durch Quellen der Komponente (D) in einem organischen Lösemittel den Wert von 10 Gew.-% nicht überschreitet.

6. Polyesterlack nach den Ansprüchen 1 bis 5,
**dadurch gekennzeichnet,**
**dass** die Komponente (D) Molmassen Mₙ von 15 000 bis 30 000 g/mol aufweist.

7. Polyesterlack nach den Ansprüchen 1 bis 6,
**dadurch gekennzeichnet,**
**dass** die Komponente (D) eine Korngröße von maximal 100 µm aufweist.

8. Polyesterlacke nach den Ansprüchen 1 bis 7,
**dadurch gekennzeichnet,**
**dass** die Komponente (D) auf den Monomeren Terephthalsäure und 1,4-Butandiol basiert.

9. Polyesterlacke nach den Ansprüchen 1 bis 8,
**dadurch gekennzeichnet,**
**dass** als Komponente (B) mit Oximen, Aminen und/oder Amiden blockiertes Polyisocyanat auf Basis von IPDI und/ oder HDI enthalten ist.

10. Polyesterlacke nach den Ansprüchen 1 bis 9,
**gekennzeichnet dadurch,**
**dass** als Komponente (C) Reaktionsprodukte aus Melamin und/oder Benzoguanamin mit Formaldehyd enthalten sind.

11. Polyesterlacke nach den Ansprüchen 1 bis 10,
**gekennzeichnet dadurch,**
**dass** die Komponente (C) mit aliphatischen Alkoholen verethert vorliegt.

12. Polyesterlacke nach den Ansprüchen 1 bis 11,
**gekennzeichnet dadurch,**
**dass** die Komponente (A) Molmassen Mₙ im Bereich von 1 000 bis 25 000 g/mol, Hydroxylzahlen von 5 bis 150 mg KOH/g und eine Glasumwandlungstemperaturen von -50 bis +70 °C aufweist.

13. Polyesterlacke nach den Ansprüchen 1 bis 12,
**dadurch gekennzeichnet,**
**dass** als Lösemittel (Komponente H) aromatische Kohlenwasserstoffe, Ester, Glykolether oder Alkohole enthalten sind.

14. Verfahren zur Herstellung eines Polyesterlackes gemäß zumindest einem der Ansprüche 1 bis 13,
**dadurch gekennzeichnet,**
**dass** die polyedrischen oligomeren Silizium-Sauerstoffcluster gelöst oder dispergiert in einem gelöst oder dispergiert in einem Lösemittel der Polyesterlackmischung zugegeben werden.

15. Verfahren gemäß Anspruch 14,
**dadurch gekennzeichnet,**
**dass** eine von 0,1 bis 15 Gew.%ige Lösung oder Dispersion der polyedrischen oligomeren Silizium-Sauerstoffcluster zugegeben wird.

16. Verfahren zur Herstellung einer Dickschichtlackierung,
**dadurch gekennzeichnet,**
**dass** ein Polyesterlack gemäß zumindest einem der Ansprüche 1 bis 10 eingesetzt wird.

17. Verfahren gemäß Anspruch 16,
**dadurch gekennzeichnet,**
**dass** der Polyesterlack als Dickschicht-Decklacke auf üblichen Primern, einschichtig als Dickschicht-Decklacke oder als Dickschicht-Primer eingesetzt wird.

18. Dickschichtlackierungen hergestellt gemäß einem Verfahren nach Anspruch 16 oder 17,
**dadurch gekennzeichnet,**
**dass** die Schichtdicke von 50 bis 120 µm aufweisen.

## Claims

1. A polyester coating material for a thick-layer coating, substantially containing
A) from 10% to 45% by weight of at least one dissolved amorphous polyester which is linear and/or has a low degree of branching,
B) from 0.5% to 20% by weight of at least.one blocked polyisocyanate resin and/or
C) from 0 to 15% by weight of at least one triazine resin,
D) from 10% to 50% by weight of fine powder, of less than 150 *µ*m in particle size, of at least one high molecular mass crystalline copolyester in suspension, having a molar mass of from 10 000 to 50 000 g/mol and being of low swellability in solvents,
E) from 0 to 20% by weight of pigments and inorganic fillers,
F) from 0 to 1% by weight of at least one catalyst,
G) from 0 to 5% by weight of at least one additive,
H) from 25% to 45% by weight of organic solvents having a boiling point of more than 160°C and
I) from 0.01% to 5% by weight of polyhedral oligomeric silicon-oxygen clusters of the formula
[(RₐX_{b}SiO_{1.5})ₘ(R_{c}X_{d}SiO)ₙ(R_{c}X_{f}Si₂O_{2.5})ₒ(R_{g}XₕSi₂O₂)ₚ]
where:
a, b, c = 0-1; d = 1-2; e, g, f = 0-3; h = 1-4;
m+n+o+p ≥ 4; a+b = 1; c+d = 2; e+f = 3 and g+h = 4;
**R** = hydrogen atom, alkyl, cycloalkyl, alkenyl, cycloalkenyl, alkynyl, cycloalkynyl, aryl or heteroaryl group or polymer unit, each of which is substituted or unsubstituted, or further functionalized polyhedral oligomeric silicon-oxygen cluster units attached via a polymer unit or a bridge unit,
**X** = oxy, hydroxyl, alkoxy, carboxyl, silyl, alkylsilyl, alkoxysilyl, siloxy, alkylsiloxy, alkoxysiloxy, silylalkyl, alkoxysilylalkyl, alkylsilylalkyl, halogen, epoxy, ester, fluoroalkyl, isocyanate, blocked isocyanate, acrylate, methacrylate, nitrile, amino or phosphine group or substituent of type **R** containing at least one such group of type **X,**
the substituents both of type **R** and of type **X** being identical or different.

2. A polyester coating material according to claim 1. **characterized in that** a functionalized silsesquioxane is present as polyhedral oligomeric silicon-oxygen cluster (component I).

3. A polyester coating material according to claim 2, **characterized in that** the functionalized silsesquioxane contains at least one epoxy group as type X substituent.

4. A polyester coating material according to claim 2, **characterized in that** the functionalized silsesquioxane contains at least one amino group as type X substituent.

5. A polyester coating material according to at least one of claims 1 to 4, **characterized in that** the mass increase due to swelling of component (D) in an organic solvent does not exceed the value of 10% by weight.

6. A polyester coating material according to any of claims 1 to 5, **characterized in that** component (D) has molar masses Mₙ of from 15 000 to 30 000 g/mol.

7. A polyester coating material according to any of claims 1 to 6, **characterized in that** component (D) has a particle size of not more than 100 *µ*m.

8. A polyester coating material according to any of claims 1 to 7, **characterized in that** component (D) is based on the monomers terephthalic acid and 1,4-butanediol.

9. A polyester coating material according to any of claims 1 to 8, **characterized in that** polyisocyanate based on IPDI and/or HDI and blocked with oximes, amines and/or amides is present as component (B).

10. A polyester coating material according to any of claims 1 to 9, **characterized in that** reaction product of melamine and/or benzoguanamine with formaldehyde is present as component (C).

11. A polyester coating material according to any of claims 1 to 10, **characterized in that** component (C) is present in a form etherified with aliphatic alcohol.

12. A polyester coating material according to any of claims 1 to 11, **characterized in that** component (A) has a molar mass Mₙ in the range from 1000 to 25 000 g/mol, a hydroxyl number of from 5 to 150 mg KOH/g and a glass transition temperature of from -50 to +70°C.

13. A polyester coating material according to any of claims 1 to 12, **characterized in that** aromatic hydrocarbons, esters, glycol ethers or alcohols are present as solvent (component H).

14. A process for producing a polyester coating material according to at least one of claims 1 to 13, **characterized in that** the polyhedral oligomeric silicon-oxygen cluster is added in solution or dispersion in a solvent to the polyester coating material mixture.

15. A process according to claim 14, **characterized in that** a from 0.1% to 15% by weight solution or dispersion of the polyhedral oligomeric silicon-oxygen cluster is added.

16. A process for producing a thick-layer coating, **characterized in that** a polyester coating material according to at least one of claims 1 to 10 is used.

17. A process according to claim 16, **characterized in that** the polyester coating material is employed as a thick-layer topcoat on a conventional primer, in single-coat form as a thick-layer topcoat or as a thick-layer primer.

18. A thick-layer coating produced by a process according to claim 16 or 17, **characterized in that** the layer has a thickness of from 50 to 120 *µ*m.

## Revendications

1. Peinture polyester pour applications en couches épaisses, contenant essentiellement :
A) 10 à 45 % en poids d'au moins un polyester amorphe dissous, linéaire et/ ou faiblement ramifié,
B) 0,5 à 20 % en poids d'une résine polyisocyanate bloquée et/ou
C) 0 à 15 % en poids d'au moins une résine à base de triazine,
D) 10 à 50 % en poids de poudre fine d'une granulométrie inférieure à 150 µm d'au moins un copolyester cristallin à haut poids moléculaire en suspension, ayant une masse molaire de 10 000 à 50 000 g/mole et une faible aptitude à gonfler dans des solvants,
E) 0 à 20 % en poids de pigments et de charges inorganiques,
F) 0 à 1 % en poids d'au moins un catalyseur
G) 0 à 5 % en poids d'au moins un additif,
H) 25 à 45 % en poids de solvants organiques ayant un point d'ébullition supérieur à 160°C et
I) 0,01 à 5 % en poids de clusters de silicium et d'oxygène oligomères polyédriques, selon la formule
[(RₐX_{b}SiO_{1,5})ₘ (R_{c}X_{d}SiO)ₙ (R_{c}X_{f}Si₂O_{2,5})ₒ (R_{g}XₕSi₂O₂)ₚ]
avec :
a, b, c = 0-1 ; d = 1-2 ; e, g, f = 0-3 , h = 1-4 ;
m+n+o+p ≥ 4 ; a+b = 1 ; c+d = 2 ; e+f = 3 et g+h = 4 ;
**R** = atome d'hydrogène, groupe alkyle, cycloalkyle, alcényle, cycloalcényle, alcynyle, cycloalcynyle, aryle, hétéroaryle ou unité polymère qui sont respectivement substitués ou non substitués, ou d'autres unités de clusters de silicium et d'oxygène oligomères polyédriques fonctionnalisées liées par l'intermédiaire d'une unité polymère ou d'une unité de pontage,
X = groupe oxy, hydroxy, alcoxy, carboxy, silyle, alkylsilyle, alcoxysilyle, siloxy, alkylsiloxy, alcoxysiloxy, silylalkyle, alcoxysilylalkyle, alkylsilylalkyle, halogène, époxy, ester, fluoroalkyle, isocyanate, isocyanate bloqué, acrylate, méthacrylate, nitrile, amino, phosphine ou au moins un substituant de type **R** présentant un tel groupe de type **X,**
aussi bien les substituants de type **R** que ceux de type **X** étant identiques ou différents.

2. Peinture polyester selon la revendication 1,
**caractérisée en ce qu'**
elle contient des silasesquioxanes fonctionnalisés en tant que clusters de silicium et d'oxygène oligomères polyédriques (composant I).

3. Peinture polyester selon la revendication 2,
**caractérisée en ce que**
les silasesquioxanes fonctionnalisés présentent au moins un groupe époxy en tant que substituant de type X.

4. Peinture polyester selon la revendication 2,
**caractérisée en ce que**
les silasesquioxanes fonctionnalisés présentent au moins un groupe amino en tant que substituant de type X.

5. Peinture polyester selon au moins l'une quelconque des revendications 1 à 4,
**caractérisée en ce que**
l'augmentation de la masse par gonflement du composant (D) dans un solvant organique ne dépasse pas 10 % en poids.

6. Peinture polyester selon les revendications 1 à 5,
**caractérisée en ce que**
le composant (D) présente des masses molaires Mₙ de 15 000 à 30 000 g/mole.

7. Peinture polyester selon les revendications 1 à 6,
**caractérisée en ce que**
le composant (D) présente une granulométrie d'au maximum 100 µm.

8. Peintures polyester selon les revendications 1 à 7,
**caractérisées en ce que**
le composant (D) est à base des monomères acide téréphtalique et butane-1,4-diol.

9. Peintures polyester selon les revendications 1 à 8,
**caractérisées en ce que**
comme composant (B), elles contiennent un polyisocyanate bloqué avec des oximes, des amines et/ou des amides à base d'IPDI et/ou d'HDI.

10. Peintures polyester selon les revendications 1 à 9,
**caractérisées en ce que**
comme composant (C) elles contiennent des produits de la réaction à partir de mélamine et/ou de benzoguanamine avec du formaldéhyde.

11. Peintures polyester selon les revendications 1 à 10,
**caractérisées en ce que**
le composant (C) se présente éthérifié avec des alcools aliphatiques.

12. Peintures polyester selon les revendications 1 à 11,
**caractérisées en ce que**
le composant (A) a des masses molaires Mₙ de l'ordre de 1 000 à 25 000 g/mole, des indices hydroxyle de 5 à 150 mg de KOH/g et des températures de transition vitreuse de -50 à +70°C.

13. Peintures polyester selon les revendications 1 à 12,
**caractérisées en ce que**
comme solvant (composant H), elles contiennent des hydrocarbures aromatiques, des esters, des éthers glycoliques ou des alcools.

14. Procédé de fabrication d'une peinture polyester selon au moins l'une quelconque des revendications 1 à 13,
**caractérisé en ce que**
les clusters de silicium et d'oxygène oligomères polyédriques sont ajoutés au mélange de peinture polymère dissous ou dispersés dans un solvant.

15. Procédé selon la revendication 14,
**caractérisé en ce qu'**
une solution ou dispersion à 0,1 à 15 % en poids est ajoutée aux clusters de silicium et d'oxygène oligomères polyédriques.

16. Procédé de fabrication d'une application en couches épaisses,
**caractérisé en ce qu'**
on utilise une peinture polyester selon au moins l'une quelconque des revendications 1 à 10.

17. Procédé selon la revendication 16,
**caractérisé en ce qu'**
on utilise la peinture polyester en tant que peintures de finition en couches épaisses sur des couches de fond usuelles, sur une seule couche en tant que peintures de finition en couches épaisses ou bien en tant que couche de fond en couches épaisses.

18. Applications en couches épaisses fabriquées selon un procédé selon la revendication 16 ou 17,
**caractérisées en ce qu'**
elles présentent une épaisseur de 50 à 120 µm.
